(19) Europäisches Patentamt
European Patent Office
Office européen des brevets

(11) Veröffentlichungsnummer: **0 006 195**
**B1**

(12) # EUROPÄISCHE PATENTSCHRIFT

(45) Veröffentlichungstag der Patentschrift: **13.05.81**

(51) Int. Cl.³: **C 07 F 9/53**

(21) Anmeldenummer: **79101823.7**

(22) Anmeldetag: **08.06.79**

(54) **Verfahren zur Herstellung von 1-Oxophospholenen-Delta 3.**

(30) Priorität: **19.06.78 DE 2826621**

(43) Veröffentlichungstag der Anmeldung: **09.01.80 Patentblatt 80/1**

(45) Bekanntmachung des Hinweises auf die Patenterteilung: **13.05.81 Patentblatt 81/19**

(84) Benannte Vertragsstaaten: **BE CH DE FR GB IT NL**

(56) Entgegenhaltungen:
**US-A-2 663 737**

**BULLETIN OF THE ACADEMY OF SCIENCES OF THE USSR, Division of Chemical Science, Vol. 24, Nr. 4, April 1975, M. A. PUDOVIK et al.: «Reaction of 2-phenyl-3-acetyl-4,5-benzo-1,3,2-oxazaphospholane with dienes», Seite 880-1**

**CHEMICAL ABSTRACTS, Vol. 81, Nr. 11, 16. September 1974, Columbus, Ohio, US, M. A. PUDOVIK et al.: «Synthesis of N-acetylated 1,3,2-oxaazaphospholanes», Seite 484, Zusammenfassung Nr. 63723f**

(73) Patentinhaber: **HOECHST AKTIENGESELLSCHAFT, Zentrale Patentabteilung Postfach 80 03 20, D-6230 Frankfurt/Main 80 (DE)**

(72) Erfinder: **Felcht, Utz-Hellmuth, Dr., Kaiserstrasse 99, D-6793 Bruchmühlbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).



ACTORUM AG.

# Verfahren zur Herstellung von 1-Oxophospholenen-Δ³

1-Oxophospholene-Δ³ der Formel I

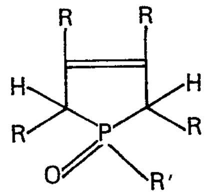

(I)

in welcher die Reste R, welche gleich oder verschieden sein können, Wasserstoff, organ. Reste und/oder Halogen und R′ = organ. Reste bedeuten, stellen technisch interessante Verbindungen dar, die z.B. als Katalysatoren zur Herstellung von Polyurethanhartschäumen [vgl. z.B. DE-OS 2742275, DE-OS 2552350, DE-OS 2245634], als selektive Metallextraktionsmittel [vgl. DE-AS 2648782] oder als Wachstumsregulatoren im Pflanzenschutz [vgl. DE-OS 2503210] Verwendung finden.

Zur Herstellung dieser Oxophospholene ist eine Reihe von Verfahren beschrieben worden. Das Grundprinzip der meisten bekannten Synthesen besteht in der Addition von Dihalogenphosphanen II an 1,3-Diene III zu Δ³-Phospholendihalogeniden IV mit anschliessender Abspaltung der Halogenatome durch $H_2O$, ROH etc. [vgl. Gleichungen 1a und 1b]:

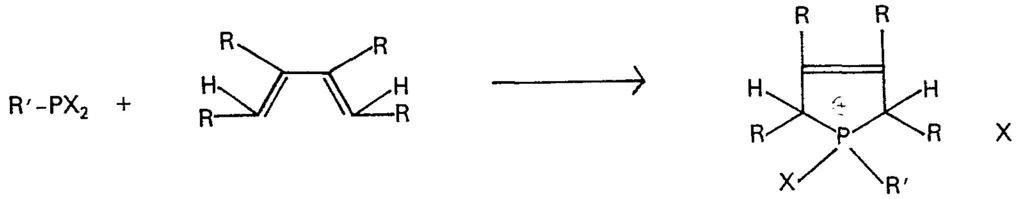

(II) (III) (IV) (Ia)

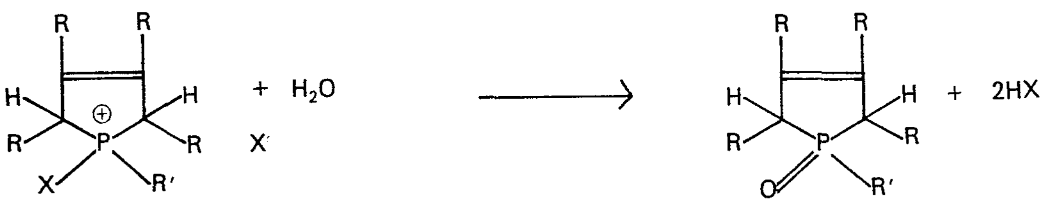


(IV) (I) (Ib)

In den Formeln besitzen R und R′ die eingangs bei Formel I angegebene Bedeutung und X bedeutet Cl oder Br.

Ein derartiges Verfahren ist z.B. beschrieben in der US-PS 2663737; für die technische Herstellung der Oxophospholene I ist dieses Verfahren jedoch infolge des erforderlichen Zeitaufwandes von mehreren Tagen bis zu einigen Wochen kaum geeignet. Zur Behebung dieses Nachteils und zur gleichzeitigen Ausbeutesteigerung wurde in neuerer Zeit vorgeschlagen, die Umsetzungen in bestimmten Lösungsmitteln durchzuführen.

So wird in der US-PS 3855186 die Verwendung von Nitrokohlenwasserstoffen als Lösungsmittel beschrieben. Die Handhabung von oxidierend wirkenden organischen Nitroverbindungen zusammen mit den reduzierend wirkenden Organodihalogenphosphanen II stellt jedoch ein erhebliches Sicherheitsrisiko dar.

Andere Autoren beschreiben Essigsäureanhydrid als Lösungsmittel [SU-PS 186465].

Obwohl in dieser SU-PS von quantitativen Ausbeuten an den gewünschten 1-Oxophospholenen gesprochen wird, haben andere Autoren durch entsprechende Nacharbeitungsversuche festgestellt, dass die Organo-dihalogenphosphine II mit Essigsäureanhydrid bereits alleine schnell zu Folgeprodukten reagieren, so dass das Verfahren für die Praxis nicht geeignet ist [DE-PS 2036173].

Die in der letztgenannten DE-PS 2036173 beschriebene Verwendung von Oxohalogeniden des 5-wertigen Phosphors, speziell von Phosphoroxychlorid und -bromid als Lösungsmittel, ist jedoch ebenfalls mit Nachteilen behaftet. Neben langen Reaktionszeiten (nach den Beispielen mindestens 30 Stunden) ist besonders der Umstand, dass die cyclischen Organophosphordichloride IV (s. Gleichung Ia) mit dem Lösungsmittel stabile Komplexe bilden, die bei der hydrolytischen Aufarbeitung nach Gleichung Ib stören, ungünstig für die Wirtschaftlichkeit des Verfahrens. Zudem geht das komplex gebundene Lösungsmittel bei der Aufarbeitung verloren.

Nach einem weiteren Verfahren [DE-OS 2606682] werden Acetylchlorid und andere Carbonsäurechloride als Lösungsmittel verwendet. Gegenüber Phosphoroxychlorid wird dadurch zwar eine geringe Ausbeutesteigerung, jedoch keine Verkürzung der Reaktionszeit erzielt. Beide Lösungsmittelarten sind ferner wegen ihrer Aggresivität und ihrer Eigenschaft, spontan mit

Wasser zu reagieren, nicht einfach zu handhaben.

Bei allen bisher erwähnten Verfahren kommt als zusätzlicher Nachteil hinzu, dass die primäre anfallenden $\Delta^3$-Phospholendichloride IV bei der hydrolytischen Aufarbeitung teilweise in beträchtlichem Umfang zu den entsprechenden Oxophospholenen-$\Delta^2$V isomerisieren [vgl. Gleichung 2]

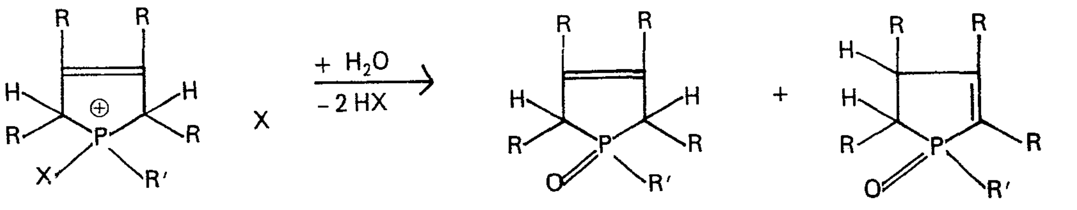


(2)

(IV) (I) (V)

Diese relativ leicht verlaufende Isomerisierung ist vor allem dann nachteilig, wenn Wert auf den Erhalt von reinem Oxophospholen-$\Delta^3$ gelegt wird, da die Trennung der $\Delta^2$- von den $\Delta^3$-Isomeren ziemlich schwierig ist.

Es sind schliesslich auch noch Verfahren bekannt, die die gewünschten 1-Oxophospholene-$^3$I aus anderen Vorstufen als den Organodihalogenphosphanen II erzeugen. So wird in der DE-OS 26 52 962 die Umsetzung von 1-β-Chloralkoxyphospholenen VI mit Alkoholen R'OH zu den 1-Oxophospholenen beschrieben [s. Gleichung 3]:

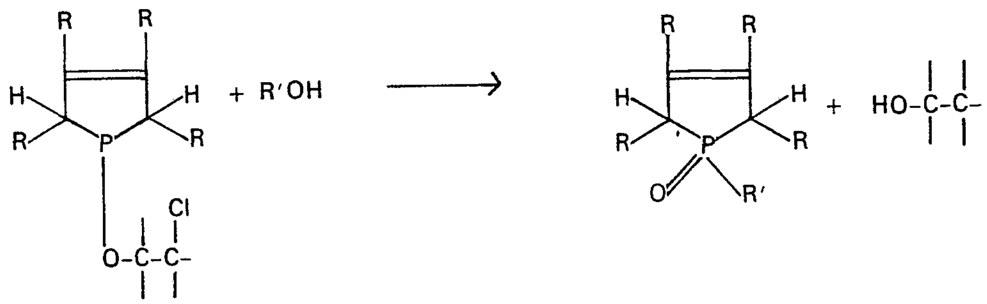

(3)

(VI) (I)

Die Ausgangsverbindungen VI müssen dabei jedoch erst aus den entsprechenden 1-Chlorphospholenen hergestellt werden [US-PS 3767708]. Da letztere vorher durch Umsetzung von Phosphortrichlorid mit 1,3-Dienen in Gegenwart von Reduktionsmitteln erhalten werden, handelt es sich um eine mehrstufige Synthese, die mit beträchtlichem Zeit- und Materialaufwand verbunden ist.

Ebenso eine im Prinzip mehrstufige Synthese stellt die von M. und A. Pudovik [Izvt. Akad. Nauk. SSR 1974, 964] offenbarte Umsetzung des 3-Acetyl-1,3,2-benzoxazaphospholans VII mit Isopren VIII bei erhöhter Temperatur zu dem 3-Methyl-1-phenyl-oxophospholen I' dar [siehe die nachstehende Gleichung 4c], da das Ausgangsprodukt VII seinerseits erst durch eine zweistufige Synthese [entsprechend den nachstehenden Gleichungen 4a und 4b] hergestellt werden muss [s. M. und A. Pudovik et al., Zh. Obsh. Khim. 44, 1020 (1974)]:

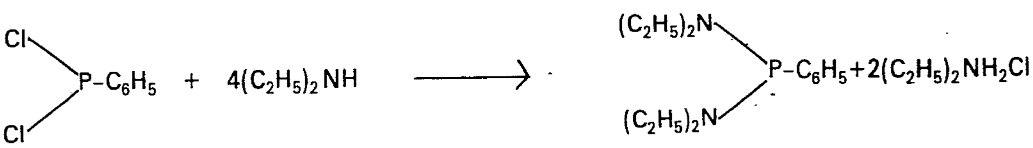

(4a)

Phenyldichlorphosphan
Diäthylamin

Phosphonigsäurediamid

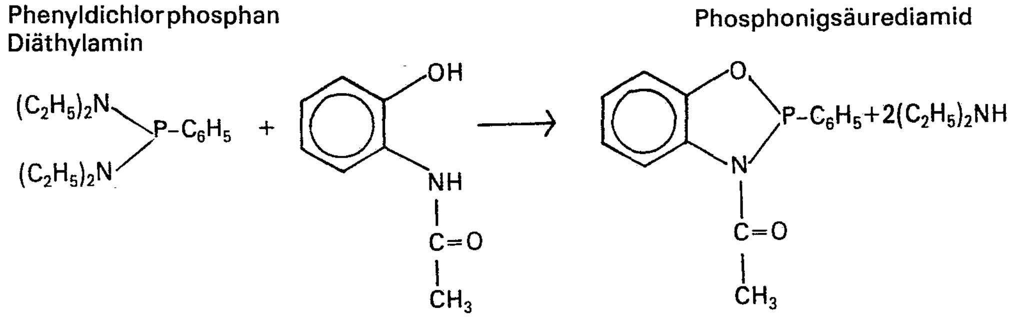

(b)

2-N-Acetylaminophenol

3-Acetyl-2-phenyl-1,3,2-benzoxazaphospholan (VII)

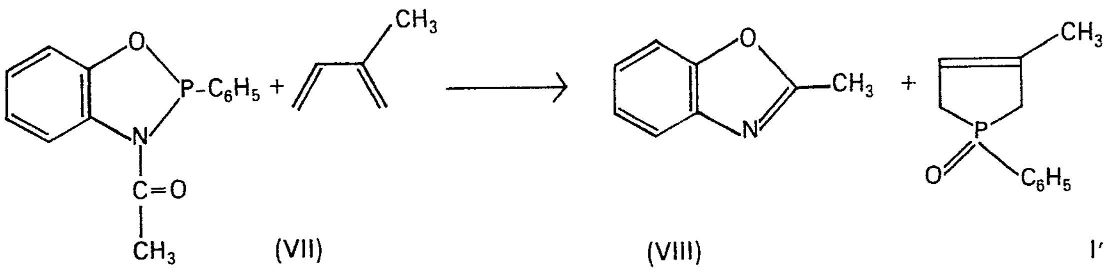

(VII) (VIII) I' (4c)

Für die Reaktion gemäss Gleichung 4b wird von den erwähnten russischen Autoren eine Ausbeute von 55% und für die Reaktion gemäss Gleichung 4c eine Ausbeute von 87,8% d.Th. angegeben; dies bedeutet eine Ausbeute von 3-Methyl-1-phenyl-oxophospholen I', bezogen auf die Menge eingesetztes 2-N-Acetylaminophenol, von etwa 48,5%. Die bei der Reaktion gemäss Gleichung 4a erhaltene Ausbeute wird – da von den russischen Autoren nicht angegeben – in diese Rechnung nicht miteinbezogen.

Eine dreistufige Synthese mit einer Ausbeute in den beiden letzten Stufen von unter 50% d.Th. ist nicht wirtschaftlich und daher für eine Durchführung im technischen Massstab ungeeignet. Bei dieser von den genannten russischen Autoren beschriebenen Verfahrensweise scheint allerdings keine oder kaum eine Isomerisierung des primär entstehenden Oxophospholens$\Delta^3$ I' stattzufinden, so dass eine schwierig durchzuführende Isomerentrennung, die bei den meisten der zuvor erwähnten bekannten Verfahren zwecks Erhalts von reinem Oxophospholen-$\Delta^3$ nötig ist, hier nicht durchgeführt werden muss.

In dem Bestreben, ein einfacheres und wirtschaftlicheres verbessertes Verfahren zur Herstellung von 1-Oxophospholen-ne $\Delta^3$ zu schaffen, welches die Nachteile der bekannten Verfahren nicht mehr oder höchstens nurmehr in sehr abgeschwächter Form aufweist, wurde nun gefunden, dass sich dieses Ziel durch Umsetzung der in dem Dreistufenverfahren der vorgenannten russischen Autoren verwendeten Ausgangsstoffe im Eintopfverfahren in ausgezeichneter Weise erreichen lässt.

Erfindungsgegenstand ist daher ein Verfahren zur Herstellung von 1-Oxophospholenen-$\Delta^3$, ausgehend von Dichlorphosphanen, 2-N-Acylaminophenolen, chlorwasserstoffbindenden organischen Stickstoffbasen und Dienen, das dadurch gekennzeichnet ist, dass man Dichlorphosphane, 2-N-Acylaminophenole, chlorwasserstoffbindende organische Stickstoffbasen und Diene im Molverhältnis etwa 1:1:≧2:(1–2) in einem inerten Lösungsmittel ohne Isolierung einer Zwischenstufe im Einstufenverfahren umsetzt.

Als Dichlorphosphane können für das erfindungsgemässe Verfahren im Prinzip alle möglichen Organo-dichlorphosphane verwendet werden; bevorzugt ist jedoch der Einsatz solcher Dichlorphosphane der Formel IX

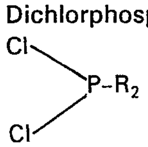 (IX)

in welcher
$R_2$ = $(C_1C_{12})$-, vorz.$(C_1$–$C_4)$-Alkyl ggf. substituiert durch Cl und/oder Br,
Cyclopentyl, Cyclohexyl)
ggf. subst. durch Cl, Br,
Phenyl, Naphthyl)
$(C_1$–$C_4)$-Alkyl und/oder
$(C_1$–$C_4)$-Alkoxy.

Beispielhafte Dichlorphosphane IX sind: Methyldichlorphosphan, Äthyldichlorphosphan, Butyldichlorphosphan, Chlormethyldichlorphosphan, Phenyldichlorphosphan, Naphthyldichlorphosphan, etc. Sie sind nach bekannten Verfahren zugänglich [K. Sasse in Houben-Weyl, Methoden der orgn. Chemie, G. Thieme Verlag, Stuttgart 1963, Bd. 12/1, S. 302 ff.]. Besonders bevorzugt sind Methyldichlorphosphan, Äthyldichlorphosphan und Phenyldichlorphosphan.

Als 2-N-Acylaminophenole kommen im Prinzip alle Verbindungen mit dem 2-N-Acylaminophenolgrundgerüst in Frage; bevorzugt sind aber Verbindungen der Formel X

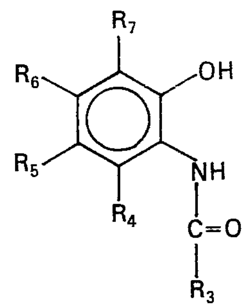

(X)

worin $R_3$ = H
$(C_1$–$C_{12})$-, vorz. $(C_1$–$C_4)$-Alkyl, ggf. subst. durch Cl und/oderBr,
Cyclopentyl, Cyclohexyl)
ggf. subst. durch Cl, Br, Phenyl, Naphthyl)
$(C_1$–$C_4)$-Alkyl und/oder
$(C_1$–$C_4)$-Alkoxy
$R_4$–$R_7$ = unabhängig voneinander H,
$(C_1$–$C_4)$-Alkyl
$(C_1$–$C_4)$-Alkoxy,
Cl, Br.

Als konkrete N-Acylaminophenole X kommen Verbindungen in Betracht wie z.B.: 2-N-Formylaminophenol, 2-N-Acetylaminophenol, 2-N-Propionylaminophenol, 2-N-Butanoylaminophenol, 2-N-Benzoylaminophenol, 2-N-Acetylamino-2-chlorphenol, 2-N-Acetylamino-4-chlorphenol, 2-N-Acetylamino-5-chlorphenol, 2-N-Acetylamino-6-chlorphenol oder die entsprechenden Bromderivate, 3-N-Acetylamino-4-

oxytoluol, 4-N-Acetylamino-3-oxy-toluol, 5-N-Acetylamino-4-oxy-1.2-xylol, 2-N-Acetylamino-4-methoxyphenol etc.

Die N-Acylaminophenole werden nach bekannnten Methoden durch Acylierung aus den betreffenden Carbonsäureanhydriden und den freien Anilinen dargestellt [s. z.B. Fierz-David u. Kuster, Helv. Chim. Acta 22, 82 (1939) oder auch L. Raiford u. C. Creider, J. Am. Chem. Soc. 46, 432 (1924)].

Als Chlorwasserstoff-bindende organische Stickstoffbasen finden vor allem primäre, sekundäre und tertiäre Amine, insbesondere solche mit 1–12 C-Atomen im Molekül, Verwendung. Solche Amine sind z.B. Triäthylamin, N,N-Dimethylanilin, Pyridin, Diäthylamin, Dimethylamin, N-Methylanilin, Piperidin, Dicyclohexylamin, Methylamin, Äthylamin, Propylamin, Butylamin, Cyclohexylamin und Anilin, besonders bevorzugt ist Triäthylamin.

Als Diene eignen sich im Prinzip alle möglichen 1.3-Diene, vor allem solche der Formel XI:

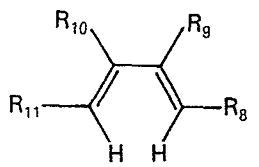

(XI)

in welcher $R_8$–$R_{11}$ = unabhängig voneinander H, ($C_1$–$C_{12}$)- vorzugsweise ($C_1$–$C_4$)-Alkyl, ggf. subst. durch Cl und/oder Br, Cyclopentyl, Cyclohexyl)
ggf. subst. durch Cl, Phenyl, Naphthyl)
Br ($C_1$–$C_4$)-Alkyl und/ oder ($C_1$–$C_4$)-Alkoxy, Cl, Br.

Geeignete konkrete Diene sind z.B. Butadien, Isopren, Dimethylbutadien, Chloropren, 1-Methylbutadien, 1-Phenylbutadien; besonders bevorzugt sind Butadien, Isopren und 2.3-Dimethylbutadien.

Brauchbare und gegenüber den Ausgangsverbindungen inerte Lösungsmittel sind aliphatische und aromatische Kohlenwasserstoffe, insbesondere solche mit 5–8 C-Atomen, wie z.B. Heptan, Hexan, Pentan oder Benzingemische mit ($C_{5-8}$)-Aliphaten, Benzol, Toluol, Xylol etc. Es finden auch chlorierte Kohlenwasserstoffe, insbesondere solche mit 1 oder 2 C-Atomen wie Methylenchlorid, Chloroform oder Tetrachlorkohlenstoff sowie Di- oder Trichloräthan Verwendung. Auch indifferente Äther, insbesondere aliphat. Äther mit 4–6 C-Atomen wie z.B. Tetrahydrofuran, Dioxan, Diisopropyläther oder Diäthyläther sind verwendbar.

Formelmässig lässt sich das erfindungsgemässe Verfahren, wenn Dichlorphosphane der Formel IX, 2-N-Acylaminophenole der Formel X und Diene der Formel XI eingesetzt werden – die chlorwasserstoffbindenden organischen Stickstoffbasen werden nachfolgend mit dem Symbol B gekennzeichnet – durch folgende Reaktionsgleichung wiedergeben:

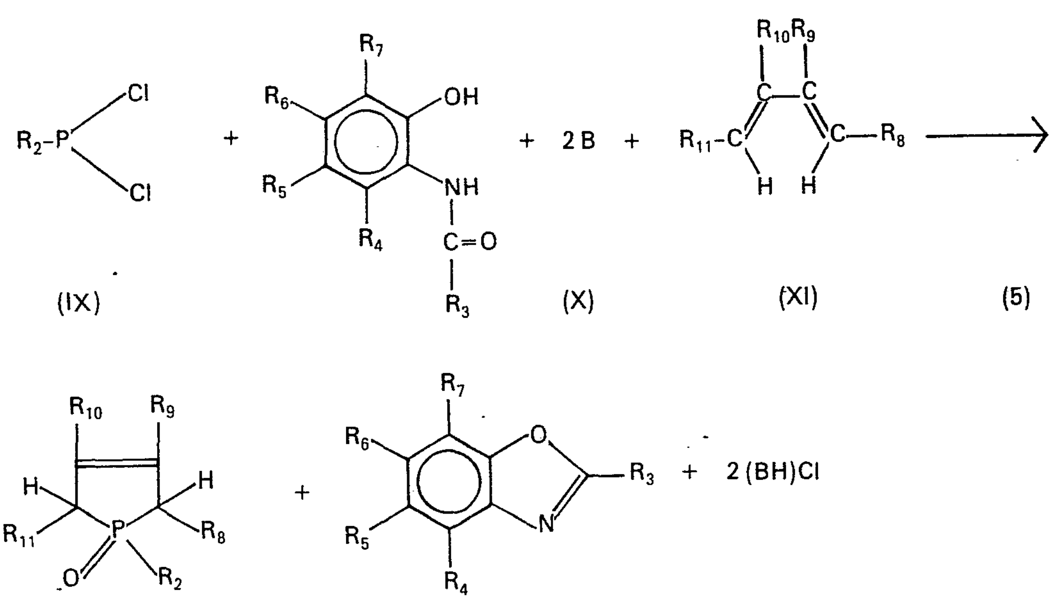

(IX) (X) (XI) (5)

1-Oxophospholen$\Delta^3$ (I) Benzoxazol (XII)

Das erfindungsgemässe Verfahren kann in einem relativ breiten Temperaturbereich durchgeführt werden. Allgemein wird bei Temperaturen von etwa +50° bis +200 °C, vorzugsweise von etwa +90° bis +160 °C gearbeitet. Die Reaktionsdauer liegt zwischen etwa einer und etwa 10 Stunden, im allgemeinen bei etwa 3-6 Stunden.

Das Verfahren wird im allgemeinen unter Inertgasatmosphäre durchgeführt. Als Inertgase kommen in Frage: Stickstoff, Kohlendioxid und Argon, jedoch genügt es auch, bei gasförmigen oder leicht flüchtigen Dienen wie z.B. Butadien, den Gasraum im Reaktionsgefäss durch einen Überschuss an Dien zu spülen.

Das Verhältnis von Lösungsmittel zur Summe der Reaktionspartner kann in einem relativ weiten Bereich variiert werden. Allgemein wird ein Gewichtsverhältnis von etwa 1:1 bis etwa 10:1 (Lösungsmittel: Summe der Reaktionspartner), bevorzugt ein Verhältnis von etwa 2:1 bis etwa 5:1 verwendet.

Im allgemeinen wird derartig gearbeitet, dass die Reaktionspartner gemischt und gemeinsam erhitzt werden, oder einer der Reaktionspartner, bevorzugt das 1,3-Dien aufgrund seiner Flüchtigkeit, zuletzt in das Reaktionsgemisch der übrigen Komponenten eingeleitet oder zugetropft wird.

Die Reaktion wird im allgemeinen unter Druck durchgeführt, wobei der Druck im Reaktionsgefäss dem Dampfdruck der flüchtigen Komponenten bei der betreffenden Temperatur entspricht. Dem Reaktionsgemisch werden ferner im allgemeinen Polymerisations-Inhibitoren in Mengen von etwa 0,1-1 Gew.-%, bezogen auf das Gesamtgewicht des Reaktionsansatzes, zugegeben. Die Zweckmässigkeit der Zugabe von Inhibitoren wie z.B. Kupferstearat, Phenothiazin oder tert.-Butylbrenzkatechin bei Reaktionen zwischen Organodichlorphosphanen und 1.3-Dienen ist bekannt [Houben-Weyl, Methoden der org. Chemie, Georg Thieme Verlag, Stuttgart 1963, Bd. XIV/1].

Nach Beendigung der Reaktion wird zunächst der Hydrochlorid-Niederschlag durch Filtration mit oder ohne Druck oder durch Zentrifugieren entfernt.

Nach Abtrennung des Salzniederschlags wird die die Reaktionsprodukte Benzoxazol XII und 1-Oxophospholen I enthaltende Lösung durch Destillation bei Normal- oder vermindertem Druck vom Lösungsmittel befreit. Das zurückbleibende Gemisch wird durch fraktionierte Destillation unter vermindertem Druck getrennt.

Die angefallenen Benzoxazole XII werden nach bekannten Methoden, z.B. durch Reaktion mit verdünnten Säuren, wieder in die entsprechenden N-Acylaminophenole X gespalten, die dann erneut eingesetzt werden können [Ladenburg, Ber. 9, 1525 (1876)].

Die Möglichkeit, ausgehend von 4 verschiedenen Ausgangsstoffen, welche bisher nur in einem dreistufigen Verfahren zu den entsprechenden 1-Oxophospholenen-$\Delta^3$ umgesetzt werden konnten, nun in einem Einstufenverfahren - noch dazu mit erheblich höheren Ausbeuten - zum Umsatz zu bringen, stellt einen ausserordentlichen Fortschritt dar. Ausserdem zeichnet sich das Verfahren durch die kurzen Reaktionszeiten, welche sich höchstens bis zu etwa 10 Stunden erstrekken, aus. Die erhaltenen 1-Oxophospholene zeichnen sich durch hohe Isomerenreinheit aus, was einen weiteren wichtigen Vorteil darstellt.

Das Gelingen der Reaktion war ausserordentlich überraschend, da sich 1.3-Diene mit Dichlorphosphanen in inerten Lösungsmitteln im angegebenen Temperaturbereich nur unter starker Verharzung zu cyclischen Organophosphor(V)dichloriden der anfangs mit IV bezeichneten Art umsetzen. Überraschend war ferner, dass die Anwesenheit von organischen Stickstoffbasen wie z.B. Triäthylamin, nicht störend wirkt, obwohl dies bei der Addition von Dichlorphosphanen an 1.3-Diene für Triäthylamin nachgewiesen wurde [s. K. Moedritzer, Syn. React. Inorg. Metal-Org. Chem. 5 (4), 299 (1975)].

Die Erfindung wird nun anhand der folgenden Beispiele weiter erläutert.

Beispiel 1

In einer Druckflasche werden zu 15,1 g (0,11 Mol) 2-N-Formylaminophenol, 23 g (0,23 Mol) Triäthylamin und 150 ml Toluol nacheinander 0,1 g Cu-Stearat als Inhibitor und 14,8 ml (0,11 Mol) Phenyldichlorphosphan gegeben. Nach Kühlen auf 0° bis -5 °C werden 6 g (0,11 Mol) kondensiertes Butadien zugegeben, die Druckflasche verschlossen und 6 Stunden bei 150 °C Badtemperatur gehalten. Nach Abkühlen wird der Hydrochloridniederschlag abgesaugt, das Filtrat bei 30 °C/12 Torr eingeengt und der ölige Rückstand fraktioniert.

Man erhält nacheinander

9,0 g (68,8% d.Th.) 1.3-Benzoxazol $Kp_{1,0}$: 40°-42 °C

13,8 g (70,5% d.Th.) 1-Phenyl-1-oxophospholan-$\Delta^3$, welches nach gaschromatographischer Analyse 1,8% $\Delta^2$-Isomeres enthält, vom $Kp_{0,5}$: 134°-137 °C.

Beispiel 2:

In einem 4-l-Emailledruckreaktor werden 151 g (1,1 Mol) 2-N-Formylaminophenol, 230 g (2,3 Mol) Triäthylamin, 3,0 g Cu-Stearat, 3,0 g tert.-Butylbrenzkatechin und 2500 ml Toluol eingefüllt. Man spült 10 Minuten mit Stickstoff und lässt dann unter Rühren 148 ml (1,1 Mol) Phenyldichlorphosphan zutropfen. Dann werden 100 g (1,85 Mol) Butadien aus einer Butadienbombe eingegast, die Ventile geschlossen und aufgeheizt. Man hält 4 Stunden bei 140 °C, anschliessend 2 Stunden bei 160 °C und kühlt ab. Das Reaktionsgemisch wird dann über eine Drucknutsche abgesaugt, das Lösungsmittel bei 50 °C/30 Torr entfernt und der Rückstand fraktioniert.

Man erhält nacheinander

86 g (65,7% d. Th.) 1.3-Benzoxazol vom $Kp_{1,4}$: 50°-52 °C

169 g (86% d.Th.) 1-Phenyl-1-oxophospholen-$\Delta^3$, welches nach gaschromatographischer Analyse 8,5% $\Delta^2$-Isomeres enthält, vom $Kp_{1,0}$: 144°-146 °C.

Ein Vergleich von Beispiel 1 und 2 zeigt, dass auch ein grösserer Überschuss an 1.3-Dien nicht zu einer Ausbeuteverringerung durch Polymerenteile führt.

Beispiel 3

Analog Beispiel 1 werden in einer Druckflasche 15,1 g (0,11 Mol) 2-N-Formylaminophenol, 23 g (0,23 Mol) Triäthylamin, 150 ml Toluol, 0,1 g Cu-Stearat und 14,8 ml (0,11 Mol) Phenyldichlorphosphan mit 7,5 g (0,11 Mol) Isopren umgesetzt und aufgearbeitet.

Man erhält so

8,7 g (66,5% d.Th.) 1.3-Benzoxazol vom $Kp_{1,0}$: 40°-42 °C

16,0 g (75,8% d.Th.) 3-Methyl-1-Phenyl-1-oxophospholen-$\Delta^3$ vom $Kp_1$: 153°-155 °C, welches nach gaschromatographischer Analyse 1,7% $\Delta^2$-Isomeres enthält.

Beispiel 4

In einen 2-l-Stahlautoklaven mit Hubrührung

gibt man 37,7 g (0,275 Mol) 2-N-Formylaminophenol, 57,7 g (0,57 Mol) Triäthylamin,0,5 g Cu-Stearat, 800 ml Toluol und 37,1 ml (0,275 Mol) Phenyldichlorphosphan. Dazu gibt man auf einmal 28 g (0,41 Mol) Isopren und heizt nach Verschliessen des Autoklaven 6 Stunden auf 140 °C, dann noch 2 Stunden bei 160Δ³. Nach Abkühlen wird der Autoklaveninhalt über eine Nutsche abgesaugt, das so vom Hydrochloridniederschlag befreite Filtrat bei 30 °C/12 Torr eingeengt und der ölige Rückstand fraktioniert.

Man erhält nacheinander
26,2 g (80,1% d.Th.) 1.3-Benzoxazol vom $Kp_{1,0}$: 40°-41 °C
35,3 g (66,9% d.Th.) 3-Methyl-1-phenyl-1-oxophospholen-$\Delta^3$ vom $Kp_1$: 154°-157 °C, welches nach gaschromatographischer Analyse 9,9% $\Delta^2$-Isomeres enthält.

Ein Vergleich der Beispiele 3 und 4 zeigt, dass das Isomerenverhältnis von äusseren Parametern wie dem verwendeten Gefässmaterial abhängig ist.

Beispiel 5

Analog Beispiel 1 werden in einer Druckflasche 15,1 g (0,11 Mol) 2-N-Formylaminophenol, 23 g (0,23 Mol) Triäthylamin, 100 ml Toluol, 0,1 g Cu-Stearat und 10 ml (0,11 Mol) Methyldichlorphosphan mit 8 g (0,12 Mol) Isopren umgesetzt und aufgearbeitet.

Man erhält so
10,6 g (80,9% d.Th.) 1.3-Benzoxazol vom $Kp_{0,8}$: 40 °C
10,4 g (72,7% d.Th.) 1.3-Dimethyl-1-oxo-phospholen-$\Delta^3$ vom $Kp_{0,3}$: 85°-87 °C, welches nach gaschromatographischer Analyse kein $\Delta^3$-Isomeres enthält.

Beispiel 6

In einem 4-l-Emailledruckreaktor werden 151 g (1,1 Mol) 2-N-Formylaminophenol, 230 g (2,3 Mol) Triäthylamin, 3,0 g Cu-Stearat, 3,0 g tert.-Butylbrenzkatechin und 2500 ml Toluol eingefült. Man spült 10 Minuten mit Stickstoff, lässt dann unter Rühren zuerst 100 ml (1,1 Mol) Methyldichlorphosphan, dann 100 g (1,5 Mol) Isopren zutropfen. Nach Schliessen der Ventile wird 5 Stunden stufenweise geheizt, zunächst 2 Stunden bei 120 °C, dann 2 Stunden bei 140 °C und zuletzt 1 Stunde bei 150 °C. Nach Abkühlen wird das Reaktionsgemisch über eine Drucknutsche abgesaugt, das Lösungsmittel bei 30 °C/15 Torr abgezogen und der Rückstand fraktioniert.

Man erhält nacheinander
92 g (70,3% d.Th.) 1.3-Benzoxazol vom $Kp_{1,0}$: 40°-43 °C
111 g (77,6% d.Th.) 1.3-Dimethyl-1-oxophospholen-$\Delta^3$ vom $Kp_{1,0}$: 95°-97 °C, welches nach gaschromatographischer Analyse kein $\Delta^2$-Isomeres enthält.

Ein Vergleich der Beispiele 5 und 6 zeigt, dass durch langsame Temperaturerhöhung im Bereich der Reaktionstemperaturen eine Ausbeuteerhöhung erreicht werden kann.

Beispiel 7

In einen 4-l-Emailledruckreaktor werden 151 g (1,1 Mol) 2-N-Formylaminophenol, 230 g (2,3 Mol) Triäthylamin, 3,0 g Cu-Stearat, 3,0 g tert.-Butylkatechin und 2500 ml Toluol eingefüllt. Man spült 10 Minuten mit Stickstoff und lässt dann unter Rühren 100 ml (1,1 Mol) Methyldichlorphosphan zutropfen. Dann werden aus einer Butadienbombe 100 g (1,85 Mol) Butadien eingegast, die Ventile geschlossen und 6 Stunden stufenweise geheizt. Zunächst 2 Stunden bei 120 °C, dann 2 Stunden bei 140 °C und zuletzt 2 Stunden bei 150 °C. Nach Abkühlen wird das Reaktionsgemisch über eine Drucknutsche abgesaugt, das Lösungsmittel bei 30 °C/15 Torr abgezogen und der Rückstand fraktioniert.

Man erhält nacheinander
61 g (61,9% d.Th.) 1.3-Benzoxazol vom $Kp_{1,0}$: 40°-42 °C
101 g (79,2% d.Th.) 1-Methyl-1-oxophospholen-$\Delta^3$ vom $Kp_{1,0}$: 88°-89 °C, welches nach gaschromatographischer Analyse 12% vom $\Delta^2$-Isomeren enthält.

Beispiel 8

In einen 4-l-Emailledruckreaktor werden 167,4 g (1,1 Mol) 2-N-Acetylaminophenol, 230 g (2,3 Mol) Triäthylamin, 3,0 g Cu-Stearat, 3,0 g tert.-Butylbrenzkatechin und 2500 ml Toluol eingefüllt. Man spült 10 Minuten mit Stickstoff und lässt dann unter Rühren zuerst 85 g (1,25 Mol) Isopren, anschliessend 100 ml (1,1 Mol) Methyldichlorphosphan zutropfen. Nach Verschliessen der Ventile wird zuerst 4 Stunden bei 140 °C, dann 1 Stunde bei 150 °C geheizt. Nach Abkühlen und Absaugen des Hydrochloridniederschlags wird das Lösungsmittel bei 30 °C/15 Torr entfernt und der Rückstand fraktioniert.

Man erhält nacheinander
121 g (82,7% d.Th.) 2-Methyl-1.3-benzoxazol vom $Kp_{1,0}$: 55°-56 °C
74 g (51,7% d.Th.) 1.3-Dimethyl-1-oxophospholen-$\Delta^3$ vom $Kp_{1,0}$: 95 °C, welches nach gaschromatographischer Analyse kein $\Delta^2$-Isomeres enthält.

Beispiel 9

Beispiel 8 wird wiederholt, wobei nur die Reihenfolge des Zutropfens von Isopren und Methyldichlorphosphan vertauscht wird. Die entsprechende Aufarbeitung liefert
112 g (76,6% d.Th.) 2-Methyl-1.3-benzoxazol vom $Kp_{1,0}$: 56 °C
89 g (62,2% d.Th.) 1.3-Dimethyl-1-oxophospholen-$\Delta^3$ vom $Kp_{1,0}$: 94°-96 °C.

Ein Vergleich der Beispiele 8 und 9 zeigt, dass die Reihenfolge der Zugabe der Reaktionspartner Organodichlorphosphan und 1.3-Dien zu den Hilfsstoffen prinzipiell beliebig ist, dass jedoch bei Zugabe des Diens als letztem Reaktionspartner eine leichte Ausbeuteerhöhung zu erzielen ist.

Beispiel 10

In einer Druckflasche werden analog Beispiel 1 15,1 g (0,11 Mol) 2-N-Formylaminophenol, 23 g

(0,23 Mol) Triäthylamin, 150 ml Toluol, 0,1 g Cu-Stearat, 14,8 ml (0,11 Mol) Phenyldichlorphosphan und 10,0 g (1,2 Mol) 2.3-Dimethylbutadien umgesetzt und aufgearbeitet.

Man erhält so

8,4 g (64,2% d.Th.) 1.3-Benzoxazol vom $Kp_{1,0}$: 42 °C
14,2 g (62,7% d.Th.) Dimethyl-1-phenyl-1-oxophospholen-$\Delta^3$ vom $Kp_{1,0}$: 161–164 °C, welches nach gaschromatographischer Analyse kein $\Delta^2$- enthält.

**Patentansprüche**

1. Verfahren zur Herstellung von 1-Oxophospholenen-$\Delta^3$, ausgehend von Dichlorphosphanen, 2-N-Acylaminophenolen, chlorwasserstoffbindenden organischen Stickstoffbasen und Dienen, dadurch gekennzeichnet, dass man Dichlorphosphane, 2-N-Acylaminophenole, chlorwasserstoffbindende organische Stickstoffbasen und Diene im Molverhältnis etwa 1:1: mindestens etwa 2:(1–2) in einem inerten Lösungsmittel ohne Isolierung einer Zwischenstufe im Einstufenverfahren umsetzt.

2. Verfahren nach Anspruch 1, dadurch gekennzeichnet, dass man als Dichlorphosphane Verbindungen der Formel IX

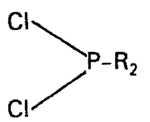 (IX)

in welcher
$R_2$ = $(C_1–C_{12})$- vorz. ($C_1$–$C_4$-Alkyl, ggf. substituiert durch Cl und/oder Br,
Cyclopentyl, Cyclohexyl)
ggf. subst. durch Cl, Br,
Phenyl, Naphthyl)
$(C_1–C_4)$-Alkyl und/oder
$(C_1–C_4)$-Alkoxy
verwendet.

3. Verfahren nach Ansprüchen 1 bis 2, dadurch gekennzeichnet, dass man als 2-N-Acylaminophenole Verbindungen der Formel X

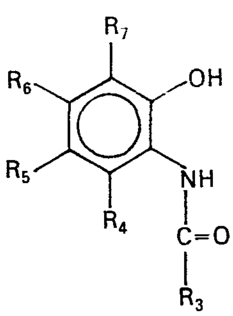 (X)

worin $R_3$ = H
$(C_1–C_{12})$-, vorz. $(C_1–C_4)$-Alkyl, ggf. subst. durch Cl, und/oder Br,
Cyclopentyl, Cyclohexyl)
ggf. subst. durch Cl, Br,
Phenyl, Naphthyl
$(C_1–C_4)$-Alkyl und/oder
$C_1–C_4)$-Alkoxy
$R_4$–$R_7$ = unabhängig voneinander H,
$(C_1–C_4)$-Alkyl,
$(C_1–C_4)$-Alkoxy,
Cl, Br
verwendet.

4. Verfahren nach Ansprüchen 1 bis 3, dadurch gekennzeichnet, dass man als chlorwasserstoffbindende organische Stickstoffbasen primäre, sekundäre und/oder tertiäre Amine mit 1 bis 12 C-Atomen im Molekül verwendet.

5. Verfahren nach Ansprüchen 1 bis 4, dadurch gekennzeichnet, dass man als Diene Verbindungen der Formel XI

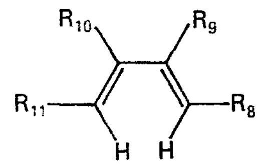 (XI)

in welcher $R_8$–$R_{11}$ =
unabhängig voneinander H,
$(C_1–C_{12})$-, vorzugsweise $(C_1–C_4)$-Alkyl, ggf. subst. durch Cl und/oder Br,
Cyclopenyl, Cyclohexyl)
ggf. sub. Phenyl, Naphthyl)
durch Cl, Br, $(C_1–C_4)$-Alkyl und/oder $(C_1–C_4)$-Alkoxy,
Cl, Br,
verwendet.

6. Verfahren nach Ansprüchen 1 bis 5, dadurch gekennzeichnet, dass man als inerte Lösungsmittel aliphatische und/oder aromatische Kohlenwasserstoffe mit 5 bis 8 C-Atomen, Chlorkohlenwasserstoffe mit 1 oder 2 C-Atomen und/oder aliphatische Äther mit 4 bis 6 C-Atomen verwendet.

7. Verfahren nach Ansprüchen 1 bis 6, dadurch gekennzeichnet, dass man die Umsetzung bei Temperaturen von etwa 50 bis 200 °C, vorzugsweise von etwa 90 bis 160 °C, durchführt.

**Claims**

1. Process for the preparation of 1-oxophosphol-$\Delta^3$-enes, starting from dichlorophosphanes, 2-N-acylaminophenols, organic nitrogen bases which bind hydrogen chloride, and dienes, characterized in reacting dichlorophosphanes, 2-N-acyl-aminophenols, organic nitrogen bases which bind hydrogen chloride, and dienes in the molar ratio of about 1:1:at least about 2:(1–2) in a one-stage process in an inert solvent, without isolating an intermediate product.

2. Process according to claim 1, characterized in using as dichlorophosphanes compounds of the formula IX

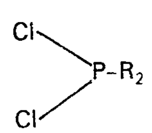 (IX)

in which $R_2$ = $(C_1–C_{12})$-alkyl, preferably $(C_1–C_4)$-alkyl, which is optionally substituted by Cl and/or Br, or $R_2$ is cyclopentyl, cyclohexyl, phenyl or

naphthyl, which are optionally substituted by Cl, Br, $(C_1-C_4)$-alkyl and/or $(C_1-C_4)$-alkoxy.

3. Process as claimed in either claims 1 or 2, characterized in using as 2-N-acylaminophenols compounds of the formula X

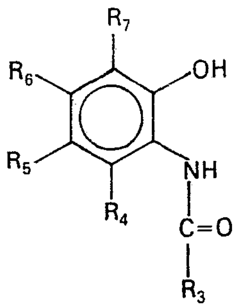

(X)

wherein $R_3$ is H, $(C_1-C_{12})$-alkyl, preferably $(C_1-C_4)$-alkyl, which is optionally substituted by Cl and/or Br, or is cyclopentyl, cyclohexyl, phenyl or naphthyl which are optionally substituted by Cl, Br, $(C_1-C_4)$-alkyl and/or $(C_1-C_4)$-alkoxy, and $R_4-R_7$ independently of one another are H, $(C_1-C_4)$-alkyl, $(C_1-C_4)$-alkoxy, Cl or Br.

4. Process as claimed in any of claims 1 to 3, characterized in using primary, secondary and/or tertiary amines with 1 to 12 C atoms in the molecule as organic nitrogen bases which bind hydrogen chloride.

5. Process as claimed in any of claims 1 to 4, characterized in using as dienes compounds of the formula XI

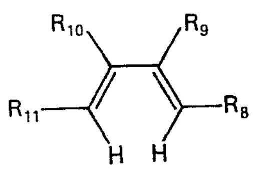

(XI)

in which $R_8-R_{11}$ are, independently of one another, H or $(C_1-C_{12})$-alkyl, preferably $(C_1-C_4)$-alkyl, which is optionally substituted by chlorine and/or bromine, or cyclopentyl, cyclohexyl, phenyl or napthyl, which are optionally substituted by Cl, Br, $(C_1-C_4)$-alkyl and/or $(C_1-C_4)$-alkoxy, or Cl or Br.

6. Process as claimed in any of claims 1 to 5, characterized in using as inert solvents aliphatic and/or aromatic hydrocarbons with 5 to 8 C atoms, chlorohydrocarbons with 1 or 2 C atoms and/or aliphatic ethers with 4 to 6 C atoms.

7. Process as claimed in any of claims 1 to 6, characterized in carrying out the reaction at temperatures of about 50 to 200 °C, preferably of about 90 to 160 °C.

**Revendications**

1. Procédé de préparation d'oxo-1$\Delta^3$-phospholènes à partir de dichlorophosphanes, de N-acylamino-2 phénols, de bases azotées organiques capables de fixer du chlorure d'hydrogène et de diènes, procédé caractérisé en ce qu'on fait réagir les dichlorophosphanes, les N-acylamino-2 phénols, les bases azotées organiques capables de fixer le chlorure d'hydrogène et les diènes dans le rapport molaire environ 1:1: au moins environ 2:(1 à 2), au sein d'un solvant inerte, sans isoler un corps intermédiaire, par un mode opératoire ne comportant qu'une seule étape.

2. Procédé selon la revendication 1, caractérisé en ce qu'on utilise, comme dichlorophosphanes, des composés répondant à la formule IX

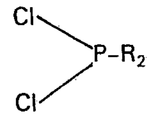

(IX)

dans laquelle

$R_2$ représente:

un radical alkyle en $C_1-C_{12}$, de préférence en $C_1-C_4$, éventuellement porteur de Cl et/ou de Br, un radical cyclopentyle, cyclohexyle, phényle ou naphtyle, éventuellement porteur d'un ou plusieurs substituants pris dans l'ensemble constitué par Cl, Br, les alkyles en $C_1-C_4$ et les alcoxy en $C_1-C_4$.

3. Procédé selon l'une des revendications 1 et 2, caractérisé en ce qu'on utilise, comme N-acylamino-2 phénols, des composés répondant à la formule X

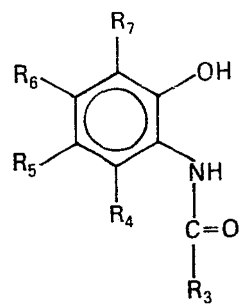

(X)

dans laquelle

$R_3$ représente H,

un radical alkyle en $C_1-C_{12}$, de préférence en $C_1-C_4$, éventuellement porteur de Cl et/ou de Br, un radical cyclopentyle, cyclohexyle, phényle ou naphtyle, éventuellement porteur d'un ou plusieurs substituants pris dans l'ensemble constitué par Cl, Br, les alkyles en $C_1-C_4$ et les alcoxy en $C_1-C_4$,

$R_4$ à $R_7$ représentent chacun, indépendamment les uns des autres, H, un alkyle en $C_1-C_4$, un alcoxy en $C_1-C_4$, Cl ou Br.

4. Procédé selon l'une quelconque des revendications 1 à 3, caractérisé en ce qu'on utilise, comme bases azotées organiques capables de fixer le chlorure d'hydrogène, des amines primaires, secondaires et/ou tertiaires contenant de 1 à 12 atomes de carbone dans leur molécule.

5. Procédé selon l'une quelconque des revendications 1 à 4, caractérisé en ce qu'on utilise, comme diènes, des composés répondant à la formule XI

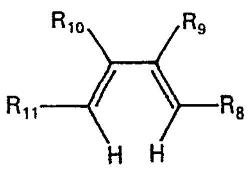

(XI)

dans laquelle

$R_8$ à $R_{11}$ représentent chacun, indépendamment les uns des autres, H,

un radical alkyle en $C_1$–$C_{12}$, de préférence en $C_1$–$C_4$, éventuellement porteur de Cl et/ou de Br,

un radical cyclopentyle, cyclohexyle, phényle ou naphtyle, éventuellement porteur d'un ou plusieurs substituants pris dans l'ensemble constitué par Cl, Br, les alkyles en $C_1$–$C_4$ et les alcoxy en $C_1$–$C_4$, ou

un atome de chlore ou de brome.

6. Procédé selon l'une quelconque des revendications 1 à 5, caractérisé en ce qu'on utilise, comme solvants inertes, des hydrocarbures aliphatiques et/ou aromatiques contenant de 5 à 8 atomes de carbone, des hydrocarbures chlorés contenant 1 ou 2 atomes de carbone et/ou des éthers aliphatiques contenant de 4 à 6 atomes de carbone.

7. Procédé selon l'une quelconque des revendications 1 à 6, caractérisé en ce qu'on effectue la réaction à températures d'environ 50 à 200 °C, de préférence d'environ 90 à 160 °C.